Europäisches Patentamt

European Patent Office

Office européen des brevets

(19)

(11) Publication number: **0 212 858**
**B1**

(12) **EUROPEAN PATENT SPECIFICATION**

(45) Date of publication of the patent specification:
04.07.90

(51) Int. Cl.⁵: **B65G 17/42**, B65G 47/40

(21) Application number: **86305643.8**

(22) Date of filing: **23.07.86**

(54) Conveyor or elevator system.

(30) Priority: **26.07.85 US 759268**

(43) Date of publication of application:
**04.03.87 Bulletin 87/10**

(45) Publication of the grant of the patent:
**04.07.90 Bulletin 90/27**

(84) Designated Contracting States:
**BE DE FR GB IT NL SE**

(56) References cited:
**DE-B- 1 116 156**
**DE-B- 2 242 474**
**US-A- 4 139 092**
**US-A- 4 232 782**
**US-A- 4 232 783**

(73) Proprietor: **REFAC INTERNATIONAL, LIMITED, 1551, Forum Place Suite 200 A, West Palm Beach Florida 33401(US)**

(72) Inventor: **Gough, George Terah, 51 Caboose Ct., Charlotte N. Carolina(US)**

(74) Representative: **Carpmael, John William Maurice et al, CARPMAELS & RANSFORD 43 Bloomsbury Square, London, WC1A 2RA(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

This invention relates to a conveyor or elevator of the type that comprises a series of buckets supported by one, or a pair, of driven chains, cables, belts, ropes or other endless entrainment means (hereinafter called chain-type) to move the buckets along a predetermined path. Conveyors or elevators of this type are known. It is desirable in such systems to have the buckets arranged close together and very often the buckets are interlocked or overlapped.

It is also desirable to enable the buckets to be maintained in a substantially horizontal attitude at all times.

When the buckets go round corners or negotiate turns, horizontally or vertically, if the buckets are interlocked or overlapped or even if they are very close together, there is a tendency for the buckets to tip.

In DE-A 2 242 472, a conveyor is disclosed comprising an elevator or conveyor comprising a series of container means supported by a driven chain (or other endless entrainment means) along a predetermined path, each container means being supported on the chain by means of at least one swinging link, guidance means being provided at at least one curve or bend in the path to cause the links to swing outwardly away from the chain so that the container means in turn move outwardly and follow a curve of greater radius than the radius of the said one curve or bend in the path, whereby the container means are spaced further apart when going round said at least one curve or bend than when they are proceeding along a straight portion of the path, and are maintained in an upright position. This conveyor could not be modified into a bucket conveyor, because the container means disclosed therein, by virtue of the way they are supported on the chain, cannot be tipped for emptying.

An object of the invention is to provide an elevator or conveyor in which the problem of bucket tipping is overcome, but wherein the buckets may be arranged to assume a horizontal attitude at all times. Another object of the invention is to provide a chain-type elevator/conveyor which can be operated at a greater speed than known chain-type conveyors and yet which is not too expensive to manufacture and maintain.

In accordance with the present invention, we provide an elevator or conveyor comprising a series of buckets supported by a driven chain (or other endless entrainment means) along a predetermined path, each bucket being supported on the chain by means of at least one swinging link, guidance means being provided at at least some of the curves or bends in the path to cause the links to swing outwardly away from the chain so that the buckets in turn move outwardly and follow a curve of greater radius than the radius of the curve or bend in the path, whereby the buckets are spaced further apart when going round such curve or bend than when they are proceeding along a straight portion of the path, and are maintained in an upright position, the buckets being maintained in close proximity with each other for filling purposes, and wherein means are provided to empty the buckets, said means comprising a cam located alongside the path of the chain and a corresponding cam follower on each bucket to cause the bucket to tip and empty when the cam follower engages the cam.

Pereferably, the buckets are supported from two chains, one being located on each side thereof, by a pair of aligned swinging links.

Preferably, adjacent buckets are arranged to be in contact or overlapped or even interlocked along the straight portions of the path but to separate when the buckets go round a curve or bend.

Preferably, the buckets are maintained in a substantially horizontal attitude at all times except when they are to be emptied.

Preferably, each link is provided with a follower roller which may engage in a track which may run parallel to the path of the chain or cable along the straight sections but which is diverted outwardly away from the normal run of the chain at two curved sections.

If a chain is employed it may have rollers or wheels at intervals along its length to engage a track to guide the chain.

The means to empty the buckets may comprise a cam located alongside the path of the chain and an arrangement of pegs on each (instead of a cam follower). Preferably, the cam and followers or pegs are designed to tip the buckets through about 125° and then tip them back to their upright position.

Preferably, each of the swinging links is connected to a bucket by means of a bucket pin and the pin carries the follower roller. The rollers which are employed for chain guidance may be carried on a shaft which performs the additional function of acting as the pivot point for the swinging link where it is pivoted to the chain. The shaft may pass through a pair of links and form the means of hingeing the links together.

The invention is preferably applied to a bucket elevator of the self-contained type which is provided with one or more loading station(s) and unloading station(s) and a driven chain or pair of chains having a vertical section so as to raise the buckets from the loading station(s) to the unloading station(s).

Two embodiments of the invention are now described by way of example with reference to the accompanying drawings, in which:-

FIGURE 1 is an end elevation of an elevator bucket for use with an elevator or conveyor system in accordance with the invention;

FIGURE 2 is a plan of the same bucket;

FIGURE 3 is a horizontal section through a portion of a chain of a bucket elevator having a single chain and shows the way in which each bucket is pivoted to the chain by a swinging link;

FIGURE 4 is a schematic side elevation of the whole bucket elevator showing the buckets supported from a chain;

FIGURE 5 is an end elevation of the elevator shown in Figure 4;

FIGURE 6 is a section on line A-A of Figure 4;

FIGURE 7 is a horizontal plan through a bucket of a twin chain unit in accordance with a second embodiment of the invention;

FIGURE 8 is a vertical section through the twin-chain unit;

FIGURE 9 is a partly schematic side elevation showing one way of how a bucket is tipped as it is advanced; and

FIGURES 10-12 are views similar to Figures 1, 2 and 9 and showing an alternative embodiment of bucket and tipping arrangement.

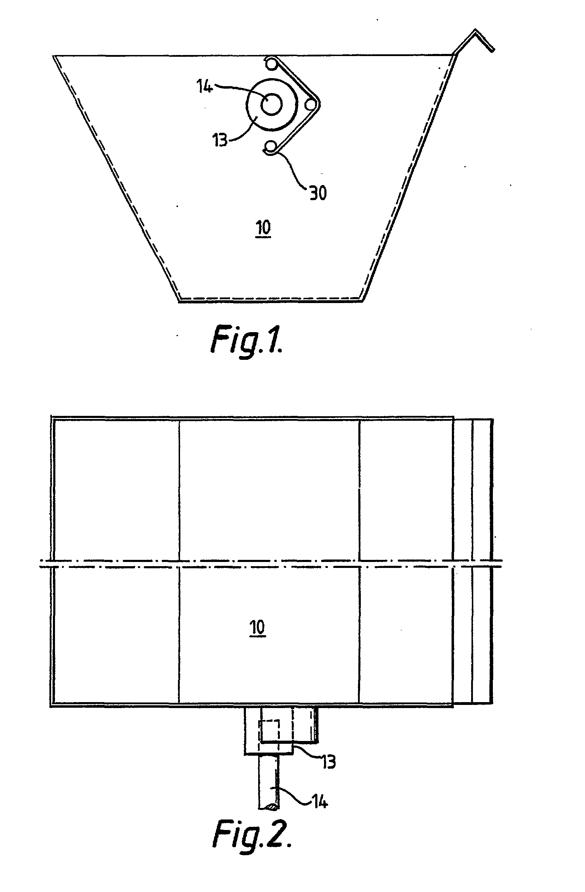

As seen in Figures 1, 2 and 3, each bucket 10 of the bucket elevator carries a trunion 13 and is pivoted by a bucket pin 14 to a swinging link 12. The bucket pins 14 each carry a roller 11 for contact with guidance means or a cam track as will be described later.

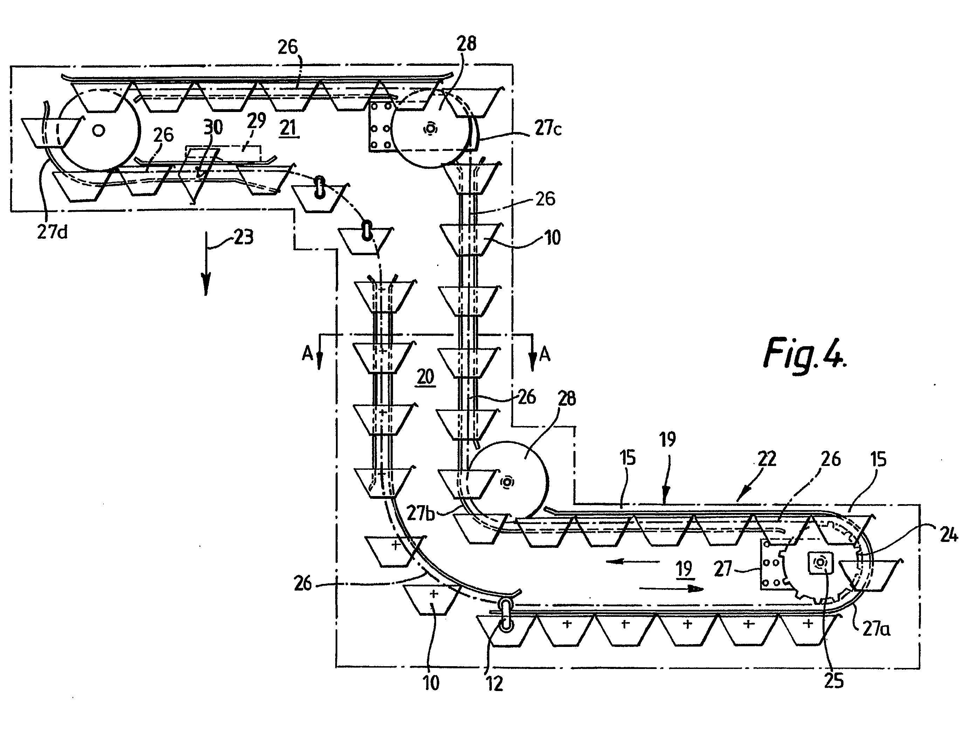

A single driven chain 15 has a shaft 16 passing through the junction of a pair of links of the chain. The swinging link 12 is pivoted to one end of the shaft 16 and the shaft also carries a pair of follower rollers 17, 18. The assembly of shaft and swinging link is repeated every fourth link in the chain so as to support the buckets as illustrated in Figure 4.

The bucket elevator shown in Figure 4 comprises a horizontal section 19, a vertical section 20 and an upper horizontal section 21. Material to be handled is loaded into the buckets 10 at loading station 22 and discharged at discharge section 23.

The chain 15 is driven in known manner from an electric motor or the like, a chain tensioner being shown at 25.

Follower rollers 17, 18 run in a closed track 26 and follower rollers 11 run around selected parts of the path of the conveyor along tracks and cams 27a, 27b, 27c, 27d; at curved parts of the conveyor path, cam tracks 27a and 27c are arranged to diverge away from track 26 (see Figure 4).

When the buckets are proceeding along a straight portion such as horizontal section 19 or a vertical portion such as 20, the swinging links 12 will remain parallel with the track 26 but when the tracks diverge as at 26, 27a, and 26, 27b, the rollers 11 will follow the diverging paths and cause the links to swing so that the buckets 10 move away from track 26 in an outward direction. As seen at 27a, the curved path created by the diverging portion of the track 27a is of greater radius than the track 26. The track portion 27a is provided by a curved surface on a cam plate 27 bolted to the conveyor frame. Thus the buckets 10 are caused to follow the curve of greater radius and therefore separate from each other during their passage round the bend. The buckets can thus proceed round the bend whilst maintaining their horizontal attitude without interfering with each other.

The curved diverging portion of track at 27c may be formed by a circular plate 28 of greater diameter than the sprocket round which the chain is carried; at 27d it may be formed by an arcuate plate against which the follower rollers can fall under gravity. Each of the curves may be configured in a similar way so that at the corners, the paths 27a - 27d diverge from the path 26. The particular shape of the diverging track part will depend upon the curvature of the bend and other factors.

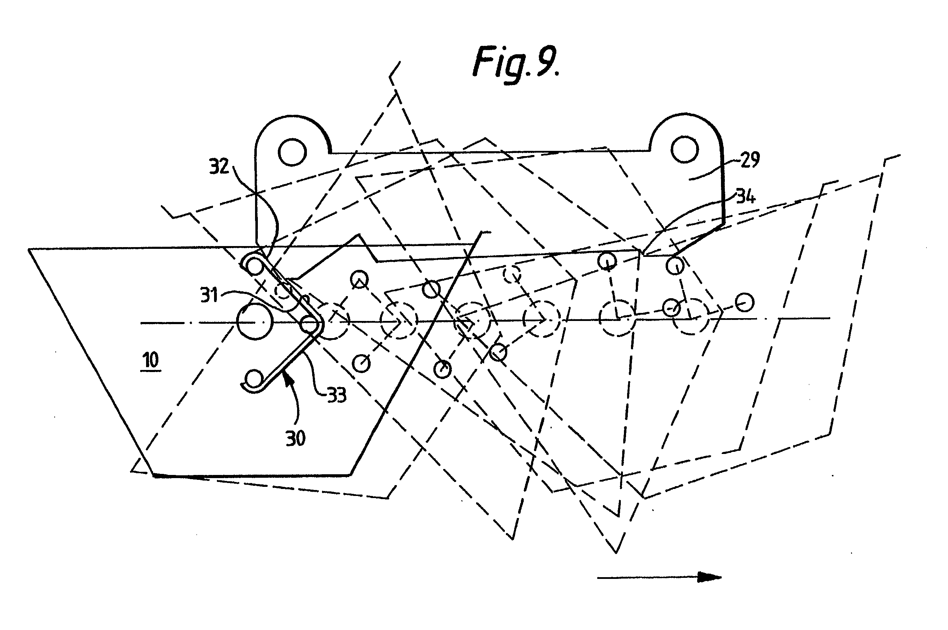

At the discharge station 23, a cam follower 30 (see Figures 4 and 9) located on each bucket contacts a discharge ramp or cam 29 causing the bucket to tip and discharge. The cam is so arranged as to cause the bucket to pivot through about 135° and dislodge its load, and then tip back again. For this purpose, each cam follower is of a generally triangular configuration (see Figure 9) or equivalent, and the cam 29 initially tips the bucket over by one side edge 31 of follower 30 hitting the cam 30 at 32, and as the buckets are advanced upside down, so the adjacent edge 33 will hit a further cam surface 34 on the cam 29, and right the bucket again. The ramps or tipping cams 29 can be at one or several different positions and can be remotely controlled through air cylinders or hydraulic rams or solenoids or actuators of various types.

Filling can take place at any horizontal position as the buckets are always in close proximity to each other or overlapped on all horizontal runs.

Because the buckets are always substantially horizontal, except when being emptied, any material that remains in the bucket after it has been emptied will not fall out during the return of the buckets to the filling position as happens in known elevators where the buckets very often return in an inverted position to the filling station.

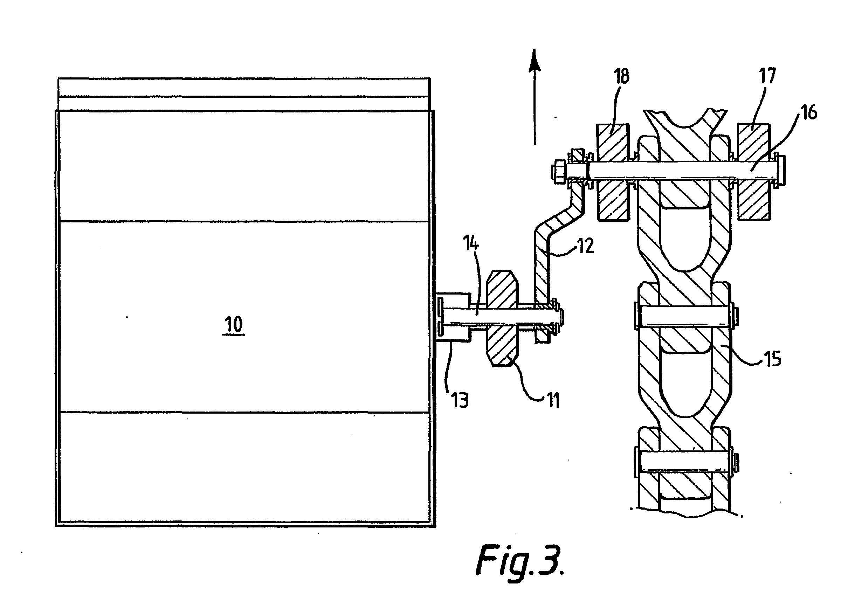

The chain shown in Figure 3 may be a hollow bearing pin type chain made in carbon steel, stainless steel or treated carbon steel. The rollers 17, which are of greater diameter than the chain link depth, can be in carbon steel, stainless steel, nylatron or other materials which will assist in lubrication and maintenance aspects.

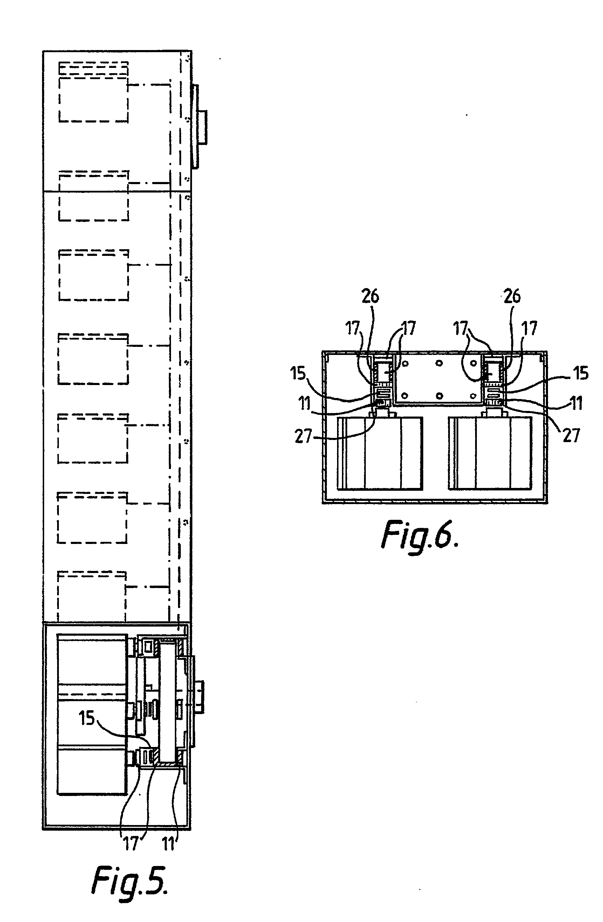

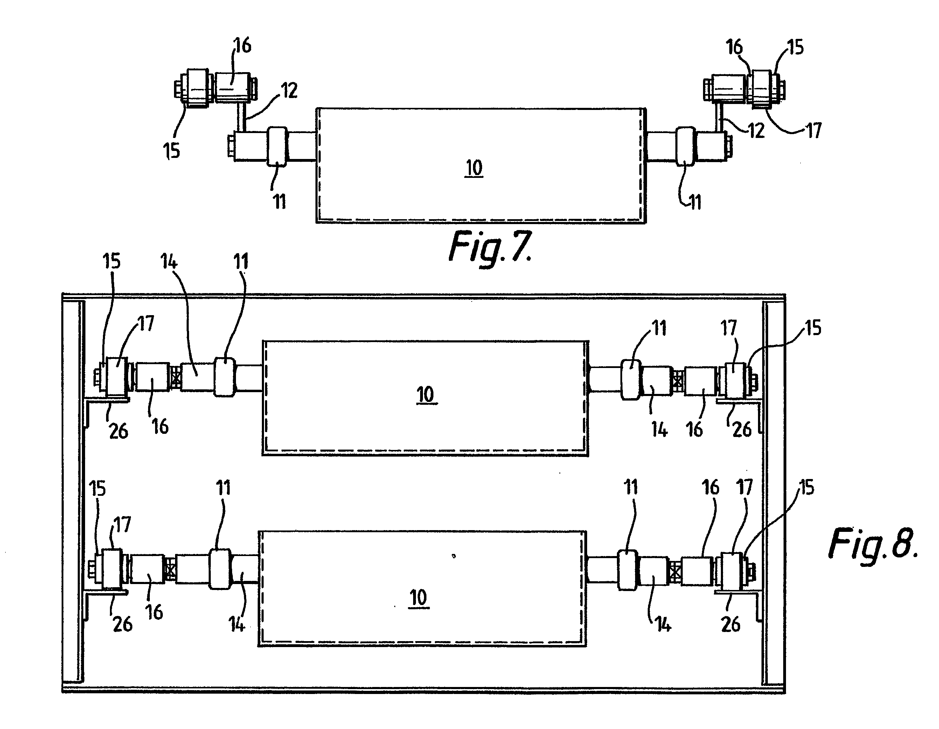

A single chain can be used as shown in Figures 1-6 or a twin chain unit may be used, as shown in Figures 7 and 8. The twin chain unit is fitted with buckets having a trunnion on each side face, supporting respective bucket pins 14 and swinging links 12, each of which is pivotally suported on a chain 15 by a shaft 16. Follower rollers 17 are provided on the shafts 16, which engage a track 26 as in the previous embodiment.

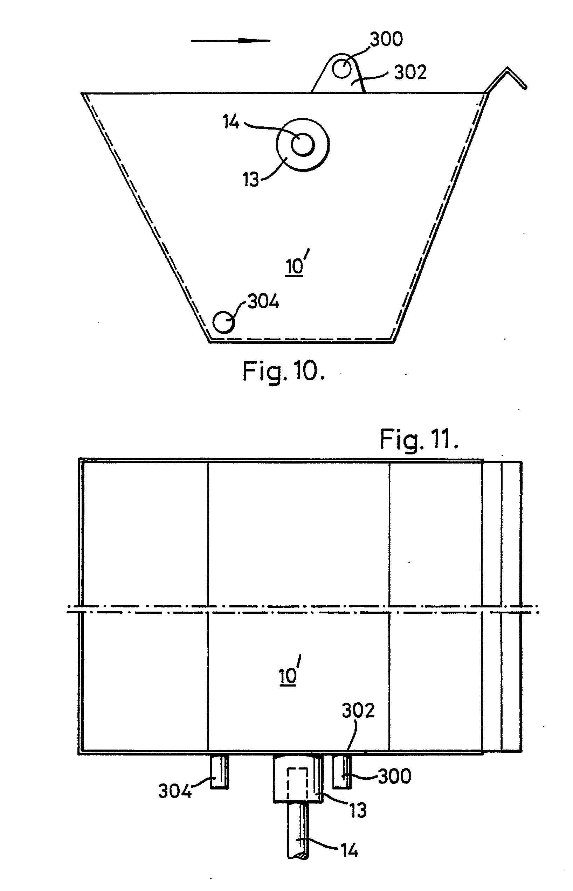

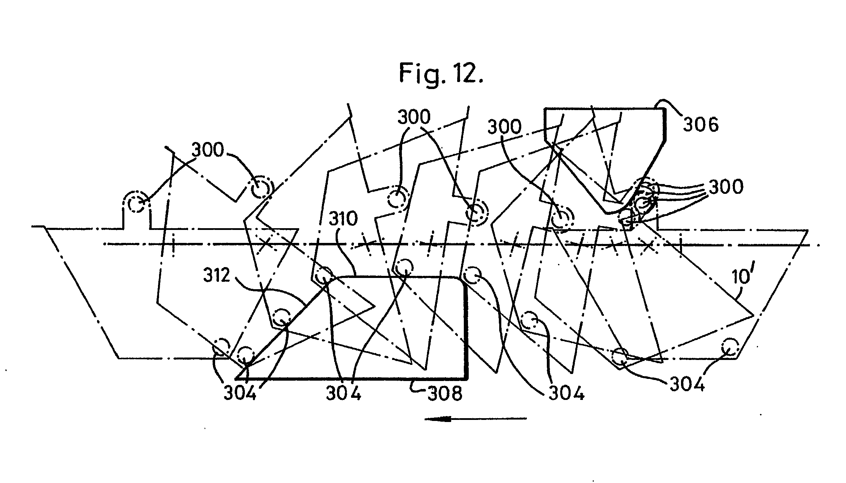

Referring now to Figures 10-12, a modified bucket 10' is shown which has the same trunion 13 and bucket pin 14 as in the previous construction but has a modified cam follower arrangement to cause it to tip in the manner shown schematically in Figure 12. On the top edge of the bucket a first pin 300 is supported on a projecting ear 302 and near the bottom of the bucket near its trailing edge a second pin 304 is provided.

Referring now to Figure 12 which shows a bucket advancing in an opposite direction to Figure 9, a discharge cam 306 is provided which is engaged by the pin or cam follower 300 on the buckdet 10' as the bucket is advanced to cause tipping of the bucket and a further cam 308 downstream of the cam 306 is provided which is engaged by the pin or cam follower 304 to right the bucket again after tipping of its contents. As can be seen from Figure 12, when the cam follower 300 engages the leading face of the discharge cam 306, the bucket is tipped through about 100° rapidly and it is then maintained in this position by gravity while its contents ard discharged and the buckedt advances. After the bucket has advanced a short distance, the cam follower 304 hits the leading edge of the further cam 308 which has the effect as the buckets are advanced of tipping the bucket back through about 20° and while this is occurring the cam follower pin 308 is carried over a horizontal face 310 of the cam 308 and is then allowed to slide down a trailing face 312 while the bucket rights itself again. It will of course be appreciated that this design of bucket tipping mechanism is equally applicable to single or double chain bucket elevators and the tipping mechanism can be provided on one or both sides of the pockets.

Although as shown applied to a bucket elevator the principles of this invention may equally well be applied to any conveyor system where buckets or other conveyor devices have to pass around bends. Of course, the buckets, instead of being supported by one or a pair of chains 16, may be supported by any other type of endless entrainment means, such as a rope(s), cable(s) or belt(s).

It will of course be understood that the present invention has been described above purely by way of example and modifications of detail can be made within the scope of the invention, which is defined by the appended claims.

**Claims**

1. An elevator or conveyor comprising a series of container means (10) supported by a driven chain (15) (or other endless entrainment means) along a predetermined path, each container means (10) being supported on the chain (15) by means of at least one swinging link (12), guidance means (27a, 27b, 27c, 27d) being provided at at least one curve or bend in the path to cause the links (12) to swing outwardly away from the chain (15) so that container means (10) in turn move outwardly and follow a curve of greater radius than the radius of the said one curve or bend in the path, whereby the container means (10) are spaced further apart when going round said at least one curve or bend than when they are proceeding along a straight portion of the path, and are maintained in an upright position, the container means (10) being buckets which are maintained in close proximity with each other for filling purposes, means (29, 30) being provided to empty the buckets (10), said means comprising a cam (29) located alongside the path of the chain (15) and a corresponding cam follower (30) on each bucket (10) to cause the bucket (10) to tip and empty when the cam follower (30) engages the cam (29).

2. An elevator or conveyor according to claim 1 characterised in that the buckets (10) are supported from a pair of chains (15), one being located on each side of the buckets (10), by a pair of aligned swinging links (12).

3. An elevator or conveyor according to claim 1 or 2 characterised in that adjacent buckets (10) are arranged to be in contact or overlapped or even interlocked along the straight portions of the path but to separate when the buckets (10) go round said curve or bend.

4. An elevator or conveyor according to claim 1, 2 or 3 characterised in that the buckets (10) are maintained in a substantially horizontal attitude at all times.

5. An elevator or conveyor according to any one of claims 1–4 characterised in that the or each link (12) is provided with a follower roller (11) and which may engage in or with a track (27a, 27b, 27c, 27d) provided for the follower (11), the track normally running parallel to the path of the chain (15) along the straight sections but being diverted outwardly away from the path of the chain (15) at two curved sections.

6. An elevator or conveyor according to any one of claims 1–5 characterised in that the chain (15) has rollers or wheels (17, 18) at intervals along its length to engage with or in a track (26) provided to guide the chain (15).

7. An elevator or conveyor according to any one of claims 1–6 characterised in that the or each link (12) is connected to a bucket (10) by means of a bucket pin (14) and in that the pin (14) carries the roller (11).

8. An elevator or conveyor according to any one of claims 1–6 characterised in that the means (29, 30) to empty the buckets are designed to tip the buckets (10) through about 135° and then tip them back to their upright position.

9. An elevator or conveyor according to any one of claims 1–6 characterised in that the means (300, 304, 306, 308) to empty the buckets comprise a pair of cams (306 and 308) located alongside the path of the chain and two corresponding cam follower pins (300, 304) on each bucket, engagement of the pin (300) with the cam (306) causing tipping of the bucket for emptying and subsequent engagement of the pin (304) with the cam (308) causing the bucket to be righted again.

10. An elevator or conveyor according to any one of the preceding claims wherein the buckets (10) are carried by two parallel swinging links (12) each pivoted on the driven chain (15), wherein said path comprises straight and curved sections.

11. An elevator according to any one of claims 1–10 characterised in that rollers (17, 18) which are employed for chain guidance are carried on a shaft (16) which performs the additional function of acting as the pivot point for the or each swinging link (12) where it is pivoted to the chain (15).

12. An elevator or conveyor according to any preceding claim, characterised in that it is of the self-contained type provided with a loading station (22) and an unloading station (23) and a driven chain (15) having a vertical section so as to raise the buckets (10) from the loading station (22) to the unloading station (23).

**Patentansprüche**

1. Aufzug oder Förderer mit einer Reihe von Behältereinrichtungen (10), die von einer angetriebenen Kette (15) (oder einer anderen endlosen Mitnehmereinrichtung) entlang einem gegebenen Weg getragen werden, wobei jede Behältereinrichtung (10) an der Kette (15) mit Hilfe wenigstens eines schwenkbaren Lenkers (12) getragen wird und an wenigstens einer Kurve am Weg Führungsmittel (27a, 27b, 27c, 27d) vorhanden sind, die bewirken, daß die Lenker (12) von der Kette (15) weg nach außen schwenken, so daß die Behältereinrichtungen (10) ihrerseits sich nach außen bewegen und einer Kurve mit größerem Radius als dem Radius der einen Kurve am Weg folgen, wodurch die Behältereinrichtungen (10) auf einen im Vergleich zu ihrem Lauf entlang einem geraden Teil des Wegs größeren gegenseitigen Abstand gebracht werden, während sie um diese wenigstens eine Kurve laufen, und in einer aufrechten Stellung gehalten werden, und wobei die Behältereinrichtungen (10) Eimer sind, die zum Zweck der Füllung sehr nahe beieinander gehalten werden, und eine dem Leeren der Eimer (10) dienende Einrichtung (29, 30) vorhanden ist, die einen entlang der Strecke des Wegs der Kette (5) angeordneten Nocken (29) und einen entsprechenden Nockenfolger (30) an jedem Eimer (10) umfaßt, um zu bewirken, daß der Eimer (10) kippt und sich leert, wenn der Nockenfolger (30) am Nocken (29) angreift.

2. Aufzug oder Förderer nach Anspruch 1, dadurch gekennzeichnet, daß die Eimer (10) durch zwei aufeinander ausgerichtete schwenkbare Lenker (12) von zwei Ketten (15) getragen werden, die auf den beiden Seiten der Eimer (10) angeordnet sind.

3. Aufzug oder Förderer nach Anspruch 1 oder 2, dadurch gekennzeichnet, daß benachbarte Eimer (10) entlang den geraden Teilen des Wegs in gegenseitiger Berührung oder Überlappung oder sogar miteinander verriegelt sind, sich jedoch trennen, wenn die Eimer (10) um die Kurve laufen.

4. Aufzug oder Förderer nach Anspruch 1, 2 oder 3, dadurch gekennzeichnet, daß die Eimer (10) zu allen Zeiten in einer im wesentlichen horizontalen Haltung gehalten sind.

5. Aufzug oder Förderer nach einem der Ansprüche 1 bis 4, dadurch gekennzeichnet, daß der oder jeder Lenker (12) mit einer Folgerrolle (11) versehen ist, die in oder an einer Schiene (27a, 27b, 27c, 27d), die für den Folger (11) vorgesehen ist, anlegbar ist, wobei die Schiene normalerweise entlang den geraden Abschnitten parallel zum Weg der Kette (15) läuft, jedoch an zwei Kurvenabschnitten vom Weg der Kette (15) nach außen verschoben ist.

6. Aufzug oder Förderer nach einem der Ansprüche 1 bis 5, dadurch gekennzeichnet, daß die Kette (15) in Abständen entlang ihrer Länge Rollen oder Räder (17, 18) zum Angriff an oder in einer Schiene (26) zum Führen der Kette (15) aufweist.

7. Aufzug oder Förderer nach einem der Ansprüche 1 bis 6, dadurch gekennzeichnet, daß der oder jeder Lenker (12) über einen Eimerbolzen (14) mit einem Eimer (10) verbunden ist und daß der Bolzen (14) die Rolle (11) trägt.

8. Aufzug der Förderer nach einem der Ansprüche 1 bis 6, dadurch gekennzeichnet, daß die dem Leeren der Einrichtung (29, 30) dienende Eimer zum Kippen der Eimer (10) um etwa 135° und zum dann Zurückkippen in ihre aufrechte Stellung entworfen ist.

9. Aufzug oder Förderer nach einem der Ansprüche 1 bis 6, dadurch gekennzeichnet, daß die Einrichtung (300, 304, 306, 308) zum Leeren der Eimer zwei Nocken (306 und 308), die längs entlang dem Weg der Kette angeordnet sind, und zwei entsprechende Nockenfolgerbolzen (300, 304) an jedem Eimer umfaßt, wobei ein Angreifen des einen Bolzens (300) am einen Nocken (306) ein Kippen des Eimers zum Leeren und ein anschließendes Angreifen des anderen Bolzens (304) am anderen Nocken (308) ein Wiederaufrichten des Eimers bewirkt.

10. Aufzug oder Förderer nach einem der vorhergehenden Ansprüche, bei dem die Eimer (10) von zwei parallelen schwenkbaren Lenkern (12) getragen werden, von denen jeder verdrehbar an der angetriebenen Kette (15) gelagert ist, und bei dem der Weg gerade Abschnitte und Kurvenabschnitte umfaßt.

11. Aufzug nach einem der Ansprüche 1 bis 10, dadurch gekennzeichnet, daß auf einer Welle (16), die die Funktion ausführt, als Drehpunkt für den oder jeden schwenkbaren Lenker (12) an der Stelle zu dienen, wo er an der Kette (15) angelenkt ist, zusätzlich Rollen (17, 18) sitzen, die der Kettenführung dienen.

12. Aufzug oder Förderer nach einem vorhergehenden Anspruch, dadurch gekennzeichnet, daß er seiner Art nach in sich geschlossen ist und mit einer Ladestation (22) und einer Entladestation (23) sowie mit einer angetriebenen Kette (15) versehen ist, die einen vertikalen Abschnitt aufweist, um so die Eimer (10) von der Ladestation (22) zur Entladestation (23) anzuheben.

## Revendications

1. Système d'élévateur ou de convoyeur comprenant une série de récipients (10) supportés par une chaîne d'entraînement (15) (ou tout autre moyen d'entraînement sans fin) le long d'une voie prédéterminée, chaque récipient (10) étant supporté sur la chaîne (15) à l'aide d'au moins un lien pivotant (12), des mécanismes de guidage (27a, 27b, 27c, 27d) étant prévus à au moins l'une des courbes ou inflexions de la voie afin de provoquer un mouvement des liens (12) en pivotement vers l'extérieur en s'éloignant de la chaîne (15) de telle façon que les récipients (10) tournent vers l'extérieur en retour et suivent une courbe de plus grand rayon comparé au rayon de ladite courbe ou inflexion de la voie, de manière que les récipients (10) soient espacés d'une distance encore supérieure lorsqu'ils se déplacent le long d'au moins l'une de ses courbes ou inflexions que lorsqu'ils se déplacent le long d'une portion droite de la voie, et sont maintenus dans une position verticale, lesdits récipients (10) étant des godets qui sont maintenus à proximité rapprochée les uns des autres pour effectuer un remplissage, un mécanisme (29, 30) étant prévu pour vider lesdits godets (10), ledit mécanisme étant constitué d'une came (29) disposée le long de la voie de la chaîne (15) et d'un suiveur de came correspondant (30) sur chaque godet (10) pour provoquer le renversement de ce dernier et la vidange de celui-ci lorsque le suiveur de came (30) est en prise avec ladite came (29).

2. Système élévateur ou convoyeur selon la revendication 1, caractérisé en ce que les godets (10) sont supportés depuis une paire de chaînes (15), chacune de celles-ci étant disposée sur l'une des faces des godets (10) à l'aide d'une paire de liens pivotants alignés (12).

3. Système élévateur ou convoyeur selon la revendication 1 ou 2, caractérisé en ce que les godets adjacents (10) sont arrangés pour être en contact ou se recouvrir ou encore être interconnectés les uns avec les autres le long des portions droites de la voie mais se séparent lorsque les godets (10) viennent en mouvement le long desdites courbes ou inflexions.

4. Système élévateur ou convoyeur selon l'une des revendications 2 à 3, caractérisé en ce que lesdits godets (10) sont maintenus dans une position sensiblement horizontale à tout moment.

5. Système élévateur ou convoyeur selon l'une des revendications 1 à 4, caractérisé en ce que chacun des liens (12) est pourvu d'un rouleau suiveur (11) et qui peut entrer en prise dans ou avec une piste (27a, 27b, 27c, 27d) prévue pour le suiveur (11), la piste s'étendant de façon normalement parallèle à la voie de la chaîne (15) le long des sections droites mais est déviée vers l'extérieur en s'éloignant de la voie de la chaîne (15) à deux sections incurvées.

6. Système élévateur ou convoyeur selon l'une quelconque des revendications 1 à 5, caractérisé en ce que la chaîne (15) comporte des rouleaux ou roues (17, 18) à des intervalles situés le long de sa longueur afin d'entrer en prise avec ou dans une piste (26) prévue pour guider la ohaîne (15).

7. Système élévateur ou convoyeur selon l'une des revendications 1 à 6, caractérisé en ce que chacun des liens (12) est connecté à un godet (10) au moyen d'un plot de godet (14) ledit plot de godet (14) supportant lui-même ledit rouleau suiveur (11).

8. Système élévateur ou convoyeur selon l'une des revendications 1 à 6, caractérisé en ce que le mécanisme (29, 30) servant à vider les godets est réalisé de manière à faire basculer lesdits godets (10) suivant un angle d'à peu près 135°, et lors de leur basculement en retour, de manière que ceux-ci reviennent à une position verticale.

9. Système élévateur ou convoyeur selon l'une des revendications 1 à 6, caractérisé en ce que les mécanismes (300, 304, 306, 308) servant à vider les godets sont constitués par une paire de cames (306, 308) disposées le long de la voie de la chaîne et deux plots suiveurs de cames (300, 304) correspondant sur chacun des godets, l'entrée en prise du plot (300) avec la came (306) provoquant le basculement du godet afin de vider ce dernier et subséquemment faire entrer en prise le plot (304) avec la came (308) provoquant à nouveau le redressement du godet.

10. Système élévateur ou convoyeur selon l'une des revendications précédentes, caractérisé en ce que les godets (10) sont supportés par deux liens pivotants parallèles (12) chacun de ces liens pivotants par rapport à la chaîne d'entraînement (15), ladite voie de déplacement de la chaîne comprenant des sections droites et des sections incurvées.

11. Système élévateur ou convoyeur selon l'une des revendications 1 à 10, caractérisé en ce que les rouleaux (17, 18) qui sont employés pour le guidage de la chaîne sont supportés par l'arbre (16) qui exécute une fonction supplémentaire consistant à agir comme un point de pivot pour chacun des liens pivotants (12) à l'endroit où ces derniers sont montés pivotants sur la chaîne (15).

12. Système élévateur ou convoyeur selon l'une des revendications précédentes, caractérisé en ce que ce convoyeur ou élévateur est du type à remplissage automatique et comporte une station de chargement (22) et une station de déchargement (23) ainsi qu'une chaîne d'entraînement (15) ayant une section verticale apte à élever les godets (10) depuis la station de chargement (22) jusqu'à la station de déchargement (23).

14

13

30

10

Fig.1.

10

13

14

Fig.2.

*Fig.3.*

EP 0 212 858 B1

Fig.4.

**Fig.5.**

**Fig.6.**

Fig.7.

Fig.8.

EP 0 212 858 B1

Fig. 9.

Fig. 10.

Fig. 11.

Fig. 12.

EP 0 212 858 B1